# EUROPEAN PATENT SPECIFICATION

(11) **EP 0 847 787 B1**
(45) Date of publication and mention of the grant of the patent: **14.04.1999**
(21) Application number: 97122030.6
(22) Date of filing: 15.12.1997
(51) Int. Cl.: B01D 46/10, G01F 1/684, B01D 46/42

(54) **Filter for fluids, including a flowmeter**
Filter für Fluide mit Durchflussmesser
Filtre pour fluides avec débitmètre

(30) Priority: 13.12.1996 IT TO961021
(43) Date of publication of application: 17.06.1998
(73) Proprietor: C.R.F. Società Consortile per Azioni, 10043 Orbassano (TO) (IT)
(72) Inventor: Malvicino, Carloandrea, 10043 Orbassano (Torino) (IT)
(74) Representative: Notaro, Giancarlo

(56) References cited:
- EP-A- 0 756 157
- US-A- 5 120 334
- "HOT-WIRE VOLUMETRIC FLOW METER" IBM TECHNICAL DISCLOSURE BULLETIN, vol. 33, no. 11, 1 April 1991, page 230/231 XP000110377
- PATENT ABSTRACTS OF JAPAN vol. 008, no. 047 (M-280), 2 March 1984 & JP 58 200071 A (YAMAHA HATSUDOKI KK), 21 November 1983,
- PATENT ABSTRACTS OF JAPAN vol. 004, no. 110 (P-022), 8 August 1980 & JP 55 066714 A (NIPPON SOKEN INC), 20 May 1980,
- PATENT ABSTRACTS OF JAPAN vol. 014, no. 183 (P-1035), 12 April 1990 & JP 02 031168 A (NKK CORP), 1 February 1990,

## Description

The present invention relates to a filter for fluids, such as for the intake air of an internal combustion engine or the intake air of an air-conditioning unit for motor-vehicles. Such a filter is for example disclosed in US-A-5120334.

The Applicant has already proposed, in its Italian patent application No. TO95A000629, filed on 24 July 1995 and still secret at the priority date of the present application (a family document of this application is EP-A-0756157 with priority date 24.07.95, filing date 17.07.96 and publication date 29.01.97), a method for measuring the characteristics of a fluid flow, which can be used for instance for measuring the flow of the intake air in an internal combustion engine with electronic injection or in other applications.

Prior to the above identified patent application of the Applicant, methods were already known for measuring the characteristics of a fluid flow, of the type in which a hot-wire anemometer is provided comprising an electrically conductive wire which is arranged within the fluid flow, and means for supplying an electric current to the wire and for measuring the characteristics of the fluid flow by indirect determination of the quantity of heat transmitted by the wire to the fluid flow. However, conventional hot-wire anemometers are able of measuring the characteristics of the flow at a single point in the cross-section of the flow. Therefore, if anemometers of this type are used in air conduits having a relatively wide cross-section (such as in the case of the intake air conduit of an internal combustion engine with electronic injection) the measure can be considered as being reliable provided that the fluid dynamic field throughout the whole cross-section of the fluid flow is substantially uniform. For this reason, the conventional anemometers can be used in applications of the above mentioned type only associated with flow regulating devices (such as honeycomb type devices) adapted to confer uniform characteristics to the flow. The use of these devices however causes a resistance to the fluid passage and a decrease of the engine power, as well as bulk problems.

The invention forming the subject of the previous patent application of the Applicant which has been identified above solves these drawbacks by a method for measuring the characteristics of a fluid flow, such as for measuring the flow of the intake air into an internal combustion engine with electronic injection, of the type in which a hot-wire anemometer is provided comprising an electrically conductive wire arranged within the fluid flow and means for supplying an electric current to the wire as well as for measuring the characteristics of the fluid flow by the indirect determination of the quantity of heat transmitted by the wire to the fluid flow, said method being characterized in that the wire is arranged so as to form a network extending throughout the whole area of the cross-section of the fluid flow, so that the measure obtained by the hot-wire anemometer relates to the average value of the characteristics measured over the whole cross-section of the fluid flow. Such a measurement by way of an electrically conductive wire is also disclosed in "Hot-wire volumetric flow meter", IBM technical disclosure bulletin, vol. 33, no. 11, 1 April 1991, page 230/231.

By operating in the above indicated way, a reliable measure can be carried out without resorting to any additional provision, without introducing any complication of `construction and without causing a decrease in the engine power.

The object of the present invention is that of providing a filter for fluids which exploits the principle on which the method proposed by the Applicant in the previous patent application is based.

The present invention therefore provides a filter for fluids, particularly for the intake air of an internal combustion engine or for the intake air of an air-conditioning unit for a motor-vehicle, said filter comprising a peripheral frame and a filtering body supported by said frame and being characterized in that said peripheral frame supports a network of electrically conductive wires, or of a single electrically conductive wire, which extends throughout the whole area of the cross section of the filtering body, said electrically conductive wires being adapted to be supplied by an electric current and associated with means for measuring the electric resistance of said wires when fluid flows through the filter, in order to measure the characteristics of this flow through the indirect determination of the quantity of heat transmitted by the network to the fluid flow.

The invention will be now described with reference to the annexed drawings, given purely by way of non limiting example, in which:
figure **1** is a perspective view of an air filter according to the invention, for the intake air of an internal combustion engine,
figure **2** is a view in cross-section at an enlarged scale taken along line II-II of figure 1,
figure **3** shows a further embodiment of the filter, which is to be used for a motor vehicle air-conditioning unit, and
figure **4** is a cross-sectional view taken along line IV-IV of figure 3.

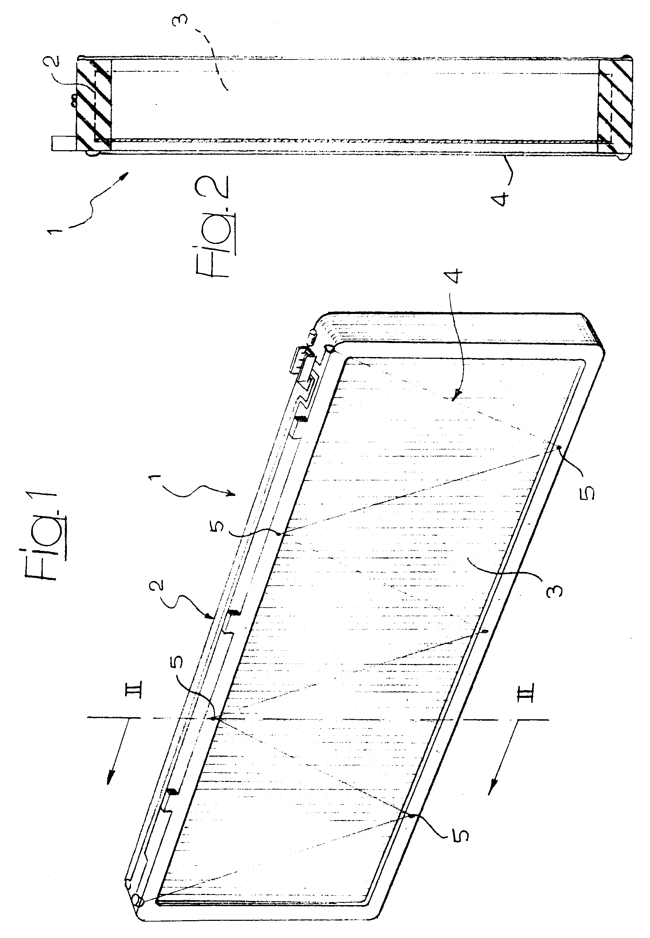

With reference to figures 1, 2, numeral 1 generally designates a filter for the intake air of an internal combustion engine with electronic injection, comprising a peripheral frame 2 and a paper filtering 3. At one of the two main faces of filter 1, the frame 2 supports a network formed by an electric conductive wire 4 which is directed through holes 5 formed on the two longer longitudinal edges of the peripheral frame 2, so that the wire 4 assumes a zig-zag configuration and covers the whole cross-section of the filter.

When the filter 1 is mounted on a motor-vehicle engine, it fulfils its function in the conventional way, while enabling the characteristics of the air flow fed to the engine to be controlled by supplying an electric current to the wire 4 and measuring the resistance thereof. This measure enables the quantity of heat transmitted by the wire to the fluid flow, and hence the characteristics of the flow, to be determined. Since the wire extends throughout the whole area of the cross-section of the filter, the measure which is obtained relates to an average value over the whole area of said cross-section and therefore is more reliable with respect to the indication provided by a hot-wire anemometer of conventional type which would be related only to a specific point of the cross-section.

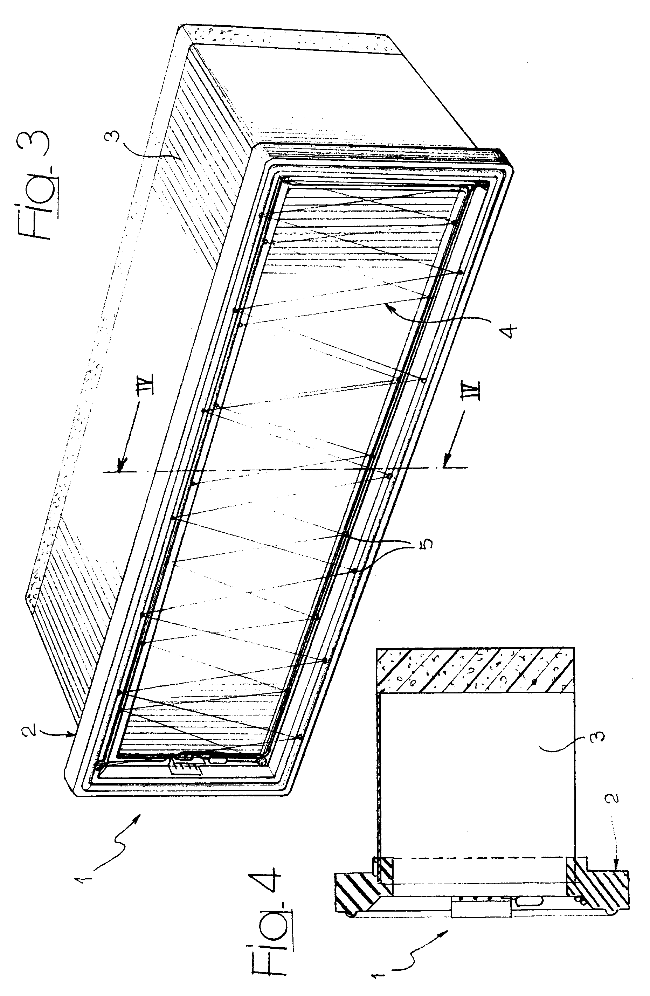

Figures 3, 4 show a variant which is to be applied to a filter for a motor-vehicle air-conditioning unit. In these figures, parts corresponding to those of figures 1, 2 have been designated by the same reference numerals. In this case, the network comprises a zig-zag arrangement of wires in two parallel and spaced apart planes, with the wires of one plane which are offset relative to the wires of the other plane.

As clearly apparent from the foregoing description, the filter for fluids according to the invention is characterized by a structure which is substantially identical to that of a conventional filter. However, by adding the above described network, the possibility of precisely controlling the characteristics of the air flow through the filter is obtained simply and at low cost.

## Claims

1. Filter for fluids, particularly for the intake air of an internal combustion engine, or for the intake air of a motor-vehicle air-conditioning unit, the filter comprising a peripheral frame (2) and a filtering body (3) supported by said peripheral frame (2), said filter being characterized in that said peripheral frame (2) supports a network (4) of electrically conductive wires, or of a single electrically conductive wire, which extends throughout the whole area of the cross-section of the filter, said wires being adapted to be supplied with electric current and associated with means for measuring the electric resistance of the wires when fluid flows through the filter, in order to measure the characteristics of the fluid flow.

2. Filter according to claim 1, characterized in that said network (4) is formed by a single wire directed through connecting means (5) provided on two opposite longitudinal edges of the peripheral frame (2), according to a zig-zag configuration.

3. Filter according to claim 2, characterized in that said network (4) has two zig-zag arrangements lying in two parallel and spaced apart planes, with the wires of each plane offset relative to the wires of the other plane.

## Patentansprüche

1. Filter für Fluide, insbesondere für die Einlaßluft eines Verbrennungsmotors, oder für die Einlaßluft einer Motor-Fahrzeug-Air-Conditioning-Einheit, wobei der Filter einen Umfangsrahmen (2) und einen Filtrierkörper (3) umfaßt, welcher von dem Umfangsrahmen (2) gestützt ist, dadurch gekennzeichnet, daß der Umfangsrahmen (2) ein Netzwerk (4) von elektrisch leitenden Drähten oder von einem einzigen elektrisch leitendem Draht stützt, der sich über den gesamten Querschnittbereich des Filters erstreckt,
daß die Drähte so angepaßt sind, daß sie mit elektrischem Strom versorgbar sind und einer Einrichtung zum dessen des elektrischen Widerstandes der Drähte zugeordnet sind, wenn Fluid durch den Filter strömt, um die Eigenschaften des Fluidstroms zu messen.

2. Filter nach Anspruch 1, dadurch gekennzeichnet, daß das Netzwerk (4) aus einem einzigen Draht gebildet ist, welcher durch eine Verbindungseinrichtung (5) geführt ist, welches an den zwei gegenüberliegenden Längsrändern des Umfangsrahmens (2) entsprechend einer Zick-Zack-Ausbildung angeordnet ist.

3. Filter nach Anspruch 2, dadurch gekennzeichnet, daß das Netzwerk (4) zwei Zick-Zack-Anordnungen aufweist, welche in zwei parallelen und voneinander getrennten Ebenen liegen, wobei die Drähte jeder Ebene in Bezug auf die Drähte der anderen Ebene versetzt sind.

## Revendications

1. Filtre pour fluides, notamment pour l'air d'admission d'un moteur à combustion interne ou l'air d'admission d'une unité de conditionnement d'air de véhicule à moteur, le filtre comprenant un cadre périphérique (2) et un corps de filtration (3) supporté par le cadre périphérique (2), le filtre étant caractérisé en ce que le cadre périphérique (2) supporte un réseau (4) de fils conducteurs de l'électricité ou d'un seul fil conducteur de l'électricité qui s'étend sur toute l'étendue de la section du filtre, les fils étant destinés à recevoir un courant électrique et étant associés à un dispositif de mesure de la résistance électrique des fils lorsqu'un fluide circule ans le filtre afin que les caractéristiques du courant de fluide soient mesurées.

2. Filtre selon la revendication 1, caractérisé en ce que le réseau (4) est formé par un fil unique passant dans un dispositif de connexion (5) formé sur deux bords longitudinaux opposés du cadre périphérique (2) avec une configuration en zigzag.

3. Filtre selon la revendication 2, caractérisé en ce que le réseau (4) a deux arrangements en zigzag placés dans deux plans parallèles espacés, les fils de chaque plan étant décalés par rapport aux fils de l'autre plan.
